# EUROPEAN PATENT SPECIFICATION

(11) **EP 1 054 493 B1**
(45) Date of publication and mention of the grant of the patent: **05.09.2007**
(21) Application number: 00110259.9
(22) Date of filing: 19.05.2000
(51) Int. Cl.: H02B 13/035

(54) **Gas-insulated switchgear**
Gasisolierte Schaltanlage
Installation de commutation isolée par gaz

(30) Priority: 21.05.1999 JP 14213699
(43) Date of publication of application: 22.11.2000
(73) Proprietor: MITSUBISHI DENKI KABUSHIKI KAISHA, Chiyoda-ku Tokyo 100-8310 (JP)
(72) Inventor: Okuno, Michiharu, Chiyoda-ku, Tokyo 100-8310 (JP); Nishitani, Junichiro, Chiyoda-ku, Tokyo 100-8310 (JP); Hashizume, Aiichiro, Chiyoda-ku, Tokyo 100-8310 (JP); Arioka, Masahiro, Chiyoda-ku, Tokyo 100-8310 (JP); Ookawa, Yoshihiro, Chiyoda-ku, Tokyo 100-8310 (JP); Mori, Hajime, Chiyoda-ku, Tokyo 100-8310 (JP); Isoya, Hiroshi, Chiyoda-ku, Tokyo 100-8310 (JP)
(74) Representative: HOFFMANN EITLE

(56) References cited:
- EP-A- 0 203 252
- DE-A- 4 103 101
- FR-A- 2 761 825
- GB-A- 2 160 020
- JP-A- 3 082 307
- JP-A- 3 082 309
- JP-A- 4 183 210
- JP-A- 4 344 108
- JP-A- 6 311 614
- JP-A- 8 336 214

## Description

### BACKGROUND OF THE INVENTION

### 1. Field of the Invention

The present invention relates to a gas-filled switchgear according to the pre-amble of claim 1. Such a switchgear is known from JP 41 83210. The switchgear may comprise a breaker and disconnectors which interrupt a power system in a polyphase AC circuit.

### 2. Description of the Related Art

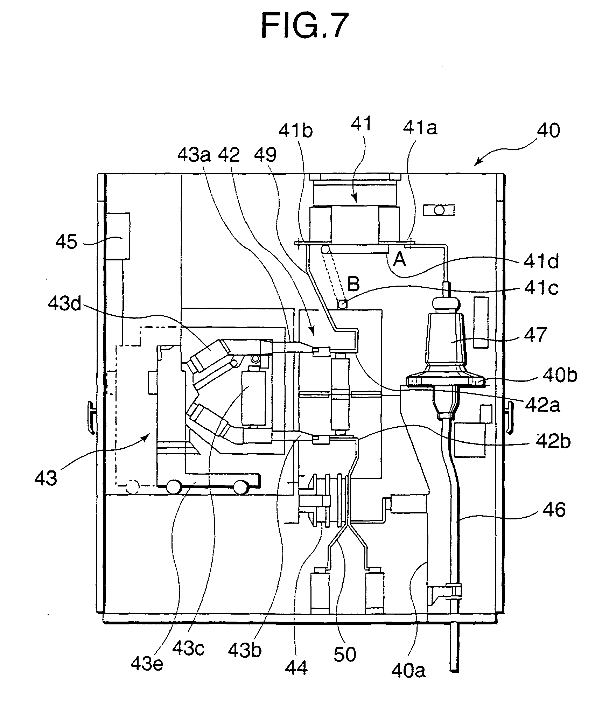

Fig. 7 is a schematic longitudinal sectional side view showing the configuration of a switchgear in a metal-clad switchboard equipment of the conventional art. In the figure, 40 denotes a switch box in which the switchboard equipment is housed. In the switch box 40, first and second disconnectors 41 and 42, a drawer type breaker 43, a current transformer 44, a protective relay 45, and the like are disposed. The switch box 40 is configured into a closed structure by a thin metal plate. One end portion of a feeder cable 46 is introduced from a lower portion of one side of the switch box 40 into a space of the box which is partitioned off by an insulating wall 40a. The one end portion is supported by an insulator 47 on a support pedestal 40b, and connected to one connecting terminal 41a of the first disconnector 41. The first disconnector 41 includes: connecting terminals 41a and 41b which are respectively fixed onto insulating stands; a grounding terminal 41c; and a blade 41d serving as a change-over conductor in which a basal portion is pivotally coupled to the connecting terminal 41b. The blade 41d is selectively set by operating means which is not shown, to one of a connecting position A where the connecting terminals 41a and 41b are connected to each other, and a disconnecting position B where the connecting terminal 41b is connected to the grounding terminal 41c.

The connecting terminal 41a is connected to the terminal of the feeder cable 46 as described above, and the connecting terminal 41b is connected to a connecting terminal 42a of the second disconnector 42 via a connecting conductor 49. The second disconnector 42 comprises connecting terminals 42a and 42b. The connecting terminal 42a is connected to the connecting terminal 41b of the first disconnector 41 as described above, and the connecting terminal 42b is connected to a load via a connecting conductor 50 in which the current transformer 44 is interposed. The connecting terminals 42a and 42b are connected to and disconnected from each other by the drawer type breaker 43.

In the drawer type breaker 43, a vacuum switch 43c is supported by support members 43d on a carriage 43e. The breaker comprises connecting conductors 43a and 43b in which basal portions are respectively connected to fixed and movable contacts of the vacuum switch, and tip end portions are projected toward the second disconnector 42. When the carriage 43e is forward moved, the connecting terminals 42a and 42b of the second disconnector 42 are connected to the connecting conductors 43a and 43b, and, when the carriage 43e is rearward moved, the connecting terminals 42a and 42b are disconnected from each other.

The protective relay 45 is configured so as to output commands such as those for the set voltage of the current transformer 44.

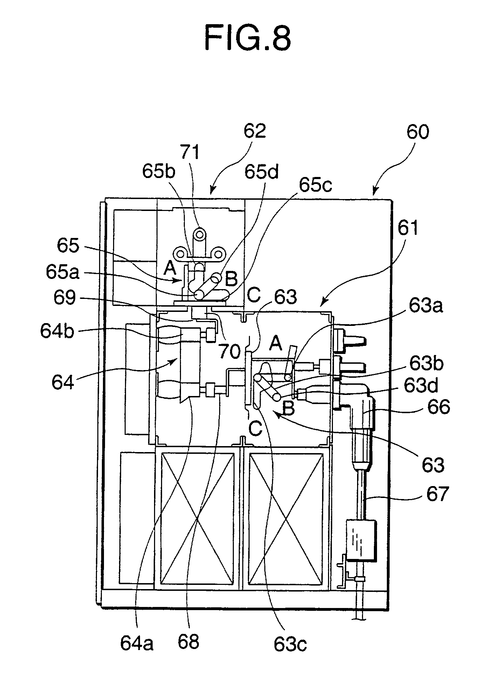

Fig. 8 is a schematic longitudinal sectional side view showing the configuration of a gas-filled switchgear of the conventional art. In the figure, 60 denotes a switch box.

In the switch box 60, closed tanks 61 and 62 which are filled with sulfur hexafluoride gas serving as an insulating gas are vertically stacked. A first disconnector 63 and a breaker 64 are disposed in the closed tank 61, and a second disconnector 65 is disposed in the closed tank 62.

The first disconnector 63 includes connecting terminals 63a and 63b, and a grounding terminal 63c, and is configured by disposing a blade 63d which is pivotally supported in the basal portion by the connecting terminal 63b. A terminal portion of a feeder cable 67 which is introduced from the outside into the switch box 60, and then into the closed tank 61 via an insulating bushing 66 is connected to the connecting terminal 63a. The connecting terminal 63b is connected to one connecting terminal 64a of the breaker 64 via a connecting conductor 68. When the blade 63d is operated, the blade is selectively set to one of three positions, a position A where the connecting terminals 63a and 63b are connected to each other, a neutral position B where the blade is connected to none of the terminals 63b and 63c, and a position C where the blade is connected to the grounding terminal 63c, so that either of connected, disconnected, and grounded states is set.

The breaker 64 is configured by placing fixed and movable contacts so as to be opposed to each other in a high-vacuum vessel. A connecting terminal 64a which is connected to the fixed contact is connected to the connecting terminal 63b of the first disconnector 63 via the connecting conductor 68. A connecting terminal 64b which is connected to the movable contact is connected via a connecting conductor 69 to a connecting terminal 65a of the second disconnector 65 in the closed tank 62. When the movable contact is drivingly operated, the movable contact is contacted to or separated from the fixed contact, thereby performing making or breaking connection.

The second disconnector 65 includes connecting terminals 65a and 65b, and a grounding terminal 65c, and is configured by disposing a blade 65d which is pivotally supported in the basal portion by the connecting terminal 65a. The connecting terminal 65a is connected to the connecting conductor 69 via an insulating bushing 70 which is passed through a partition wall between the closed tanks 61 and 62. The connecting terminal 65b is connected to an insulated bus 71. When the blade 65d is operated by an operating unit which is not shown, the blade is selectively set to one of a position A where the connecting terminals 65a and 65b are connected to each other, a neutral position B where the blade is connected to none of the terminals 65b and 65c, and a position C where the blade is connected to the grounding terminal 65c, so that either of connected, disconnected, and grounded states is set.

In the figures, only the power system and the main circuit apparatuses for one phase are shown. Actually, plural sets of a power system and main circuit apparatuses respectively corresponding to the phases of a polyphase AC circuit.

In a switchgear of a metal-clad switchboard equipment such as that shown in Fig. 7, the switch box 40 is not provided with sufficient air tightness. Therefore, such a switchgear has a problem in that salt, dust, moisture, and the like of the outside air easily enter the switchgear and deposit onto the main circuit apparatuses to impair their insulating properties, whereby dielectric breakdown is easily caused. In a gas-filled switchgear such as that shown in Fig. 8, since sulfur hexafluoride gas which is used as the insulating gas has a greenhouse effect which is 20,000 times that of carbon dioxide, there is a problem in that the gas largely affects the global environment and it is requested to regulate emission of the gas.

### SUMMARY OF THE INVENTION

The present invention provides a gas-filled switchgear according to claim 1. Preferred embodiments are defined by the dependent claims.

The invention has been conducted in view of the circumstances mentioned above, and therefore at least one embodiment of the invention provides a gas-filled switchgear in which the dimensions can be reduced, the insulation properties are less impaired by the outside air, and also influences exerted on the global environment can be reduced.

According to an embodiment described hereinafter, a gas-filled switchgear comprises: a disconnector and a breaker which are disposed in a closed tank that is filled with an insulating gas, and connecting terminals of which are connected to or disconnected from each other by a change-over conductor; a first connecting conductor in which one end is connected to the disconnector and another end is connected to a feeder cable disposed in the closed tank; and a second connecting conductor in which one end is connected to a bus disposed outside the closed tank and another end enters the closed tank via an insulating bushing and is then connected to one terminal of the breaker.

According to an embodiment described hereinafter, the breaker and the disconnector are disposed in the closed tank which is filled with the insulating gas, a terminal portion of the feeder cable is connected to one end of the disconnector in the closed tank via another insulating bushing, and one end of the breaker is connected to the external insulated bus via the insulating bushing. Therefore, an enclosed structure can be easily realized, and the configuration can be largely simplified, so that the production cost can be reduced.

According to an embodiment described hereinafter, a gas-filled switchgear comprises: first and second closed tanks that are filled with an insulating gas; a first disconnector and a breaker which are disposed in the first closed tank, and connecting terminals of which are connected to or disconnected from each other by a change-over conductor; a second disconnector which is disposed in the second closed tank with being connected to the breaker; a first connecting conductor which is disposed in the first closed tank, and in which an upper end portion is connected to the first disconnector and another end portion is connected to an external feeder cable via an insulating bushing; a second connecting conductor which is disposed in the first and second closed tanks, and in which one end portion is connected to the breaker and another end portion is connected to the second disconnector; and a third connecting conductor which is disposed in the second closed tank, and in which one end portion is connected to the second disconnector and another end portion is connected to a bus disposed outside the second closed tank, via an insulating bushing.

According to an embodiment described hereinafter, the breaker and the first disconnector are disposed in the first closed tank which is filled with the insulating gas, and the second disconnector is disposed in the second closed tank which is filled with the insulating gas. Therefore, insulating properties of the main circuit apparatuses can be prevented from being impaired, and an electric shock accident or a short-circuit accident due to ingress of an animal or the like can be prevented from occurring.

According to an embodiment described hereinafter, sets each consisting of the breaker, the disconnector(s), the feeder cable, and the bus are disposed, a number of the sets being equal to a number of sets of phases of polyphase AC circuits. In the gas-filled switchgear of an embodiment described hereinafter, the closed tank, or the first and second closed tanks are filled with dry air.

According to an embodiment described hereinafter, in place of sulphur hexafluoride gas which is used in the conventional art, dry air is used. Therefore, the switchgear exerts no influence on the environment. Even when the dry air leaks to the outside, there arises no fear of environmental pollution.

### BRIEF DESCRIPTION OF THE DRAWINGS

To enable a better understanding of the invention, and to show how the same may be carried into effect, reference will now be made, by way of example only, to the accompanying drawings, in which:
Fig. 1 is a schematic longitudinal sectional side view showing the configuration of Embodiment 1.
Fig. 2 is a longitudinal sectional front view taken along the line II-II of Fig. 1.
Fig. 3 is a schematic longitudinal sectional side view showing the configuration of Embodiment 2.
Fig. 4 is a longitudinal sectional front view taken along the line IV-IV of Fig. 3.
Fig. 5 is a schematic longitudinal sectional front view showing the configuration of Embodiment 3.
Fig. 6 is a schematic plan view taken along the line VI-VI of Fig. 5.
Fig. 7 is a schematic longitudinal sectional side view showing the configuration of a metal-clad switchgear of the conventional art.
Fig. 8 is a schematic longitudinal sectional side view showing the configuration of a gas-filled switchgear.

### DETAILED DESCRIPTION OF THE PREFERRED EMBODIMENTS

Hereinafter, the invention will be described, by way of example, with reference to the drawings showing embodiments in which the invention is applied to a gas-filled switchgear for a three-phase AC circuit.

### (Embodiment 1)

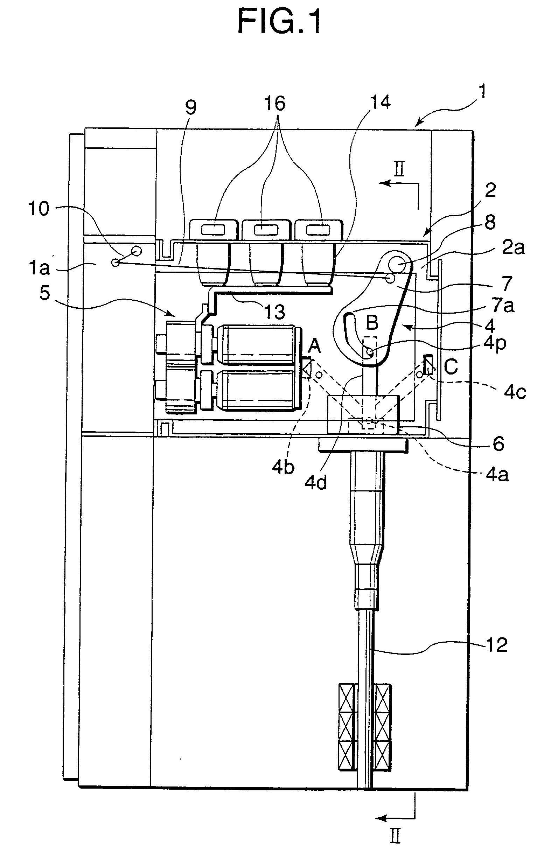

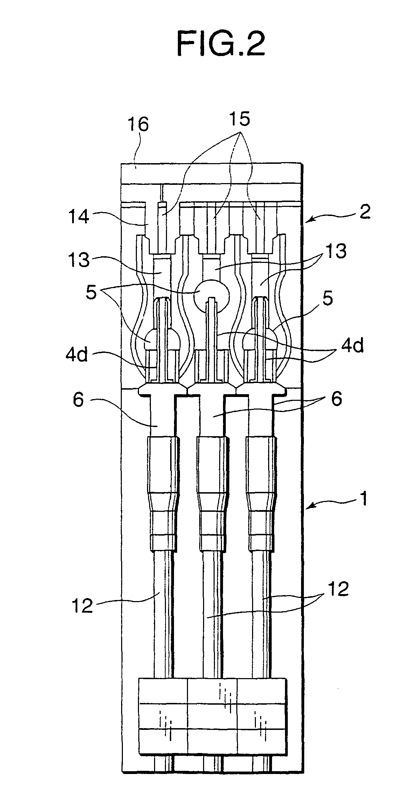

Fig. 1 is a schematic longitudinal sectional side view showing the configuration of Embodiment 1 of the invention, and Fig. 2 is a longitudinal sectional front view taken along the line II-II of Fig. 1. In the figures, 1 denotes a switch box of a gas-filled switchgear for a three-phase AC circuit.

In the switch box 1, a closed tank 2 which is filled with dry air is placed in a position which is upper than the vertical center of the box. Disconnectors (in Fig. 1, only one disconnector is shown) 4, and breakers 5 which respectively correspond to the phases are disposed in the closed tank 2.

Each of the disconnectors 4 includes a connecting terminal 4a in an insulating bushing 6 which is passed through the bottom wall of the closed tank 2, a connecting terminal 4b which is connected to the fixed contact of the corresponding one of the breakers 5, and a grounding terminal 4c. The disconnector is configured by disposing a blade 4d which is pivotally supported in the basal portion by the connecting terminal 4a, and a lever 7 which is used for operating the blade 4d and made of an insulating material.

In the lever 7, one end portion is rotatably supported via a rotary shaft 8 by a mounting plate 2a in the closed tank 2, and a guide groove 7a with which a pin 4p disposed in the tip end of the blade 4d is engaged is formed in the tip end portion. One end of a link 9 which is made of an insulating material is coupled to a middle portion of the lever in the longitudinal direction, and the other end of the link is coupled to one end of an operating lever 10. The other end of the operating lever 10 is rotatably supported by a mounting wall 1a of the switch box 1. The tip end of a feeder cable 12 is connected to the connecting terminal 4a of the disconnector 4. When the lever 7 is rotated about the rotary shaft 8 by operating the operating lever 10, the blade 4d is selectively set to one of positions, a position A which is indicated by the one-dot chain line and in which the blade 4d is connected to the fixed contact of the breaker 5, a neutral position B where the blade is connected to none of the terminals 4b and 4c, and a position C where the blade is connected to the grounding terminal 4c, so that power supply, disconnected, and grounded states are selectively set by the positions, respectively.

Two of the breakers 5 are disposed in the lower portion of the closed tank 2, and the remaining one of the breakers is disposed above the two breakers so as to straddle them.

In each of the breakers, fixed and movable contacts which are not shown are placed so as to be opposed to each other in a high-vacuum vessel, and the movable contact is moved forward or rearward with respect to the fixed contact, thereby connecting or disconnecting an electric path.

The fixed contact of the breaker 5 is connected to the connecting terminal 4b of the disconnector 4 as described above, the movable contact is connected to one end of a connecting conductor 13, and the other end of the connecting conductor 13 is connected to an one end portion of a connecting conductor 15 disposed in an insulating bushing 14 which is passed through the upper wall of the closed tank 2. The other end of the connecting conductor 15 is connected to the corresponding one of insulated buses 16 which are arranged on the closed tank 2, and which correspond to the phases, respectively.

Each of the insulated buses 16 is configured by covering a conductor constituting the bus with an insulating tube or the like.

In Embodiment 1 described above, the electric power supplied through the feeder cables 12 is supplied to the fixed contacts of the breakers 5 via the respective blades 4d. When the breakers 5 are closed (referred to as turned on) in response to a closing command, the fixed contacts are connected to the insulated buses 16 via the connecting conductors 13 and the conductors in the insulating bushings 14, so that the power is supplied to the load.

By contrast, when an opening command is given to the breakers 5, the fixed and movable contacts are separated from each other to interrupt the current supply. When the blades 4d are positioned to the neutral position B by operating the operating lever 10, the electric path is disconnected. As a result, works of inspecting, repairing, replacing a load apparatus, and the like are enabled.

The switchgear is configured so that the disconnector 4 and the breaker 5 are disposed in the closed tank 2 which is filled with dry air, and connection and disconnection with respect to the breaker 5 are performed by operating the blade 4d which is connected to the tip end of the feeder cable 12 in the disconnector 4. Therefore, the configuration can be largely simplified, and miniaturization is enabled. Furthermore, since dry air is used as the insulating gas, influence on the environment can be reduced at the low costs.

### (Embodiment 2)

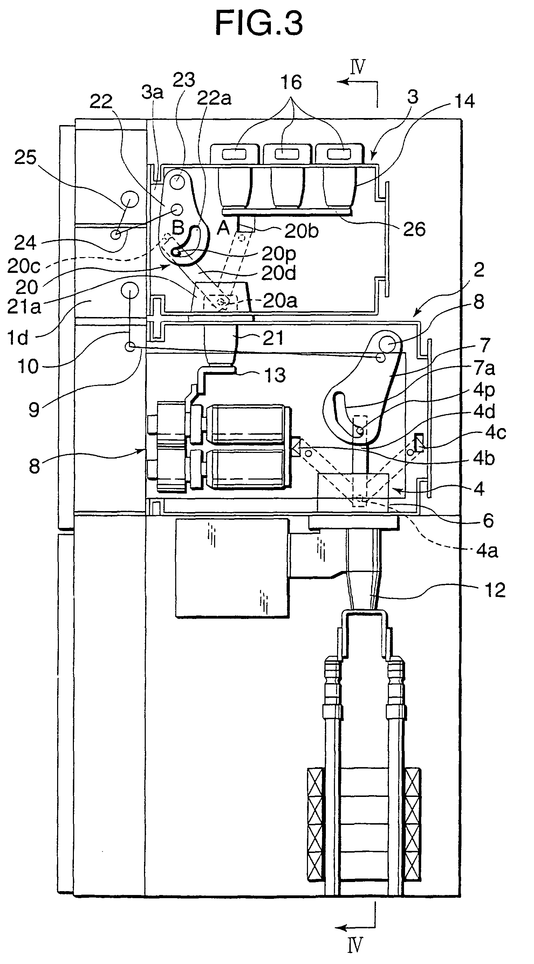

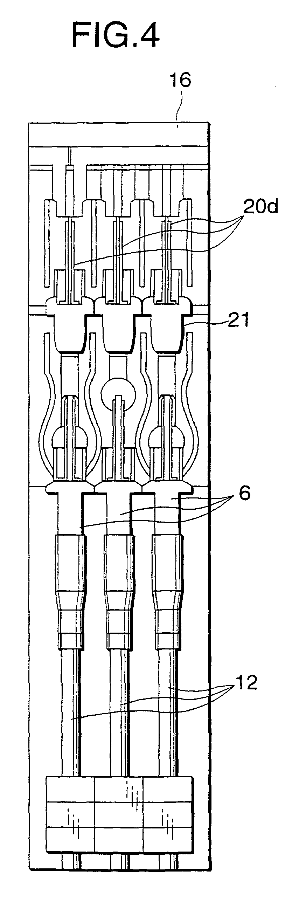

Fig. 3 is a schematic longitudinal sectional side view showing the configuration of Embodiment 2, and Fig. 4 is a longitudinal sectional front view taken along the line IV-IV of Fig. 3.

In Embodiment 2, two closed tanks 2 and 3 are disposed in a switch box 1 so as to be vertically juxtaposed. In the lower closed tank 2, disconnectors (referred to as first disconnectors) 4 and breakers 5 which respectively correspond to the phases are disposed in the same manner as Embodiment 1. Second disconnectors 20 are disposed in the upper closed tank 3. The first disconnectors 4 and the breakers 5 which are disposed in the lower closed tank 2 are configured in a substantially same manner as those of Embodiment 1.

That is, each of the first disconnectors 4 includes a connecting terminal 4a in an insulating bushing 6 which is passed through the bottom wall of the closed tank 2, a connecting terminal 4b which is connected to the fixed contact of the corresponding one of the breakers 5, and a grounding terminal 4c. The disconnector is configured by disposing a blade 4d which is pivotally supported in the basal portion by the connecting terminal 4a is disposed, and a lever 7 which is used for operating the blade 4d and made of an insulating material.

In the lever 7, one end portion is rotatably supported via a rotary shaft 8 by a mounting plate 2a in the closed tank 2, and a guide groove 7a with which a pin 4p disposed in the tip end of the blade 4d is engaged is formed in the tip end portion. One end of a link 9 which is made of an insulating material is coupled to a middle portion of the lever in the longitudinal direction, and the other end of the link is coupled to one end of an operating lever 10. The other end of the operating lever 10 is rotatably supported by a mounting wall 1a of the switch box 1. The tip end of a feeder cable 12 is connected to the connecting terminal 4a of the first disconnector 4. When the lever 7 is rotated about the rotary shaft 8 by operating the operating lever 10, the blade 4d is selectively set to one of positions, a position A which is indicated by the one-dot chain line and in which the blade 4d is connected to the fixed contact of the breaker 5, a neutral position B where the blade is connected to none of the terminals 4b and 4c, and a position C where the blade is connected to the grounding terminal 4c, so that power supply, disconnected, and grounded states are selectively set by the positions, respectively.

Two of the breakers 5 are disposed in the lower portion of the closed tank 2, and the remaining one of the breakers is disposed above the two breakers so as to straddle them. In each of the breakers, fixed and movable contacts which are not shown are placed so as to be opposed to each other in a high-vacuum vessel, and the movable contact is moved forward or rearward with respect to the fixed contact, thereby connecting or disconnecting an electric path.

Each of the second disconnectors 20 includes: a connecting terminal 20a disposed on a connecting conductor 21a in an insulating bushing 21 which is passed through a partition wall between the first and second closed tanks 2 and 3; a connecting terminal 20b connected to a connecting conductor 26 which is connected to corresponding one of the insulated buses 16; and a grounding terminal 20c. The disconnector further comprises a blade 20d which is pivotally supported in the basal portion by the connecting terminal 20a, and a lever 22 which is used for operating the blade 20d and made of an insulating material.

In the lever 22, the basal portion is rotatably supported via a shaft 23 by a mounting plate 3a in the closed tank 3, and a guide groove 22a with which a pin 20p disposed in the tip end of the blade 20d is engaged is formed in the tip end portion. One end of a link 24 which is made of an insulating material is coupled to a middle portion of the lever in the longitudinal direction, and the other end of the link 24 is pivotally coupled to one end of an operating lever 25. The basal portion of the operating lever 25 is rotatably supported by a mounting plate 1d.

When the lever 22 is rotated about the shaft 23 by operating the operating lever 25, the blade 20d is selectively set to one of positions, a position A in which the connecting terminals 20a and 20b are connected to each other via the blade 20d, and a position B in which the connecting terminal 20a is connected to the grounding terminal 20c via the blade 20d, so that the connecting position where the blade is connected to the insulated bus 16, and the disconnecting position where the blade is connected to the grounding terminal 20c are selectively set.

Embodiment 2 described above is configured so that the first breaker 4, and the disconnector 5 which is connected or disconnected by the blade 4d of the first breaker 4 are disposed in the closed tank 2 which is filled with dry air, the second disconnector 20 is disposed in the other closed tank 3, and connection and disconnection between the breaker 5 and the insulated bus 16 are performed by the blade 20d of the second disconnector. As compared with a switchgear of the conventional art, therefore, the configuration can be largely simplified, and the production cost can be reduced. Furthermore, dry air is used in place of sulfur hexafluoride gas. Even when the dry air leaks to the outside, consequently, there arises no fear of environmental pollution.

### (Embodiment 3)

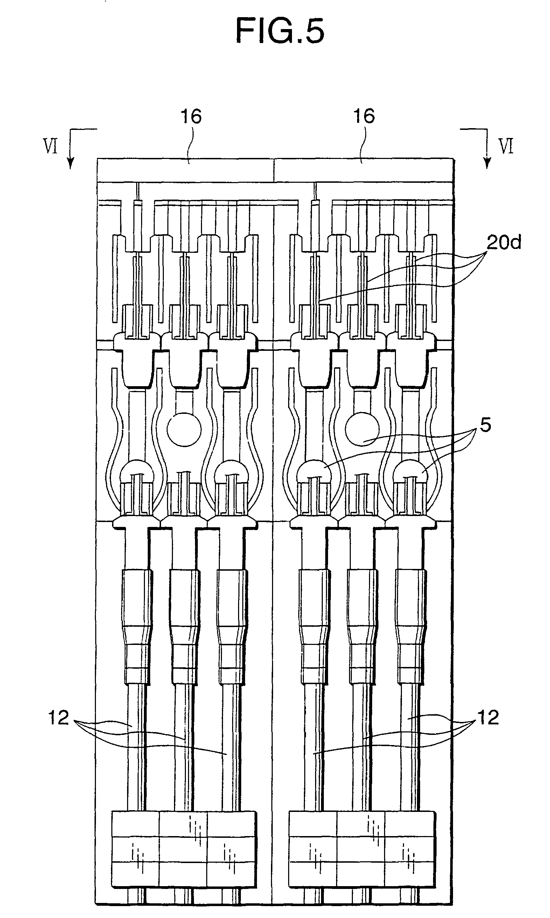

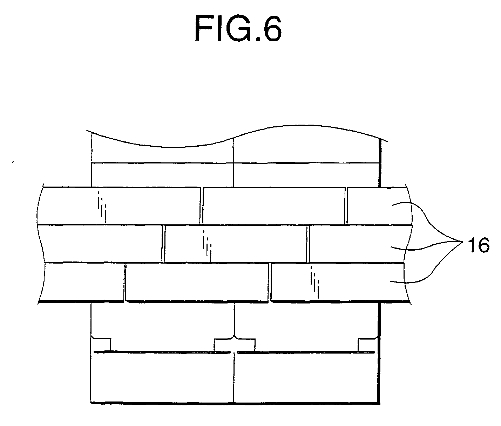

Fig. 5 is a schematic longitudinal sectional front view showing the configuration of Embodiment 3, and Fig. 6 is a schematic plan view taken along the line VI-VI of Fig. 5.

In Embodiment 3, plural sets (in the drawings, two sets) of gas-filled switchgears for a polyphase AC circuit are arranged in parallel. The structure is substantially identical with that which is obtained by arranging in parallel two sets of the structures shown in Embodiment 2. The corresponding components are denoted by the same reference numerals, and their description is omitted.

According to an embodiment described above, the breaker and the disconnector are disposed in the closed tank which is filled with the insulating gas, a terminal portion of the feeder cable is connected to one end of the disconnector in the closed tank via an insulating bushing, and one end of the breaker is connected to the external insulated bus via an insulating bushing. Therefore, an enclosed structure can be easily realized, and the configuration can be simplified, so that the production cost can be reduced.

According to an embodiment described above, the breaker and the first disconnector are disposed in the first closed tank which is filled with the insulating gas, and the second disconnector is disposed in the second closed tank. Therefore, insulating properties of the main circuit apparatuses can be prevented from being impaired, and an electric shock accident or a short-circuit accident due to ingress of an animal or the like can be prevented from occurring.

According to an embodiment described above, in place of sulphur hexafluoride gas which is used as an insulating gas in the conventional art, dry air is used. Therefore, the switchgear exerts substantially no influence on the environment. Even when the dry air leaks to the outside, there arises no fear of environmental pollution.

## Claims

1. A gas-filled switchgear comprising:
a first disconnector (4) and a breaker (5) which are disposed in a first closed tank (2) that is filled with an insulating gas, and connecting terminals of which are connected to or disconnected from each other by a change-over conductor (4d);
a first connecting conductor (4a) wherein one end is connected to said first disconnector (4) and another end is connected to a feeder cable (12) disposed in said first closed tank (2); and
a second connecting conductor (13, 15) wherein one end is connected to a bus (16) disposed outside said first closed tank (2) and another end enters said first closed tank (2) via an insulating bushing (14) and is then connected to one terminal of said breaker (5);
**characterised in that**
said change-over conductor (4d) includes a first end connected to the first conductor (4a) and a second end selectively connected to or disconnected from said breaker (5).

2. A gas-filled switchgear according to claim 1 comprising:
a second closed tank (3) that is filled with an insulating gas;
a second disconnector (20) disposed in said second closed tank (3) and connected to said breaker (5);
the first connecting conductor (4a) connected via an insulating bushing (6) to the external feeder cable (12);
the second connecting conductor (13, 15) disposed in said second closed tank (3) in addition to said first closed tank (2), wherein when the second connecting conductor (13, 15) is disposed in said second closed tank (3), one end portion is connected to said breaker (5), and the other end portion is connected to said second disconnector (20); and
a third connecting conductor (20a) which is disposed in said second closed tank (3), wherein one end portion is connected to said second disconnector (20) and another end portion is connected to a bus (16) disposed outside said second closed tank (3) via an insulating bushing (14).

3. A gas-filled switchgear according to claim 1 or 2, wherein sets, each including said breaker (5), said first disconnector (4), said feeder cable (12), and said bus (16), are disposed, a number of said sets being equal to a number of sets of phases of polyphase AC circuits.

4. A gas-filled switchgear according to claim 1 or 2, wherein said first and second closed tanks (2, 3) are filled with dry air.

5. The gas-filled switchgear according to any one of preceding claims, **characterised in that** said change-over conductor (4d) is pivotally supported in a basal portion by said first conductor (4a).

6. The gas-filled switchgear according to any one of preceding claims, **characterised in that** said first conductor (4a) is a connecting terminal connected between said first end of said change-over conductor (4d) and said feeder cable (12).

## Patentansprüche

1. Gas-gefüllte Schalteinrichtung, mit:
einem ersten Trennschalter (4) und einem Unterbrecher (5), die in einem ersten geschlossenen Tank (2) angeordnet sind, der mit einem isolierenden Gas gefüllt ist, und von welchen Verbindungsanschlüsse durch einen Umschaltleiter (4d) miteinander verbunden oder voneinander getrennt sind;
einem ersten Verbindungsleiter (4a), wobei ein Ende mit dem ersten Trennschalter (4) verbunden ist und ein anderes Ende mit einem Zuführungskabel (12) verbunden ist, das in dem ersten geschlossenen Tank (2) angeordnet ist; und
einem zweiten Verbindungsleiter (13, 15), wobei ein Ende mit einer Sammelschiene (16) verbunden ist, die außerhalb des ersten geschlossenen Tanks (2) angeordnet ist, und ein anderes Ende in den ersten geschlossenen Tank (2) über eine Isolierbuchse (14) eintritt, und dann mit einem Anschluss des Unterbrechers (5) verbunden ist;
**dadurch gekennzeichnet, dass**
der Umschaltleiter (4d) ein erstes Ende, das mit dem ersten Leiter (4a) verbunden ist, und ein zweites Ende umfasst, das selektiv mit dem Unterbrecher (5) verbunden oder von ihm getrennt ist.

2. Gas-gefüllte Schalteinrichtung nach Anspruch 1, mit:
einem zweiten geschlossenen Tank (3), der mit einem isolierenden Gas gefüllt ist;
einem zweiten Trennschalter (20), der in dem zweiten geschlossenen Tank (3) angeordnet und mit dem Unterbrecher (5) verbunden ist;
wobei der erste Verbindungsleiter (4a) über eine Isolierbuchse (6) mit dem äußeren Zuführungskabel (12) verbunden ist;
wobei der zweite Verbindungsleiter (13, 15) in dem zweiten geschlossenen Tank (3) angeordnet ist, zusätzlich zu dem ersten geschlossenen Tank (2), wobei, wenn der zweite Verbindungsleiter (13, 15) in dem zweiten geschlossenen Tank (3) angeordnet ist, ein Endabschnitt mit dem Unterbrecher (5) verbunden ist und der andere Endabschnitt mit dem zweiten Trennschalter (20) verbunden ist; und
einem dritten Verbindungsleiter (20a), der in dem zweiten geschlossenen Tank (3) angeordnet ist, wobei ein Endabschnitt mit dem zweiten Trennschalter (20) verbunden ist und ein anderer Endabschnitt mit einer Sammelschiene (16) verbunden ist, die außerhalb des zweiten geschlossenen Tanks (3) angeordnet ist, über eine Isolierbuchse (14).

3. Gas-gefüllte Schalteinrichtung nach Anspruch 1 oder 2, wobei Sätze, jeder den Unterbrecher (5), den ersten Trennschalter (4), das Zuführungskabel (12) und die Sammelschiene (16) umfassend, angeordnet sind, wobei eine Anzahl dieser Sätze gleich ist einer Anzahl von Sätzen der Phasen von mehrphasigen Wechselstromschaltungen.

4. Gas-gefüllte Schalteinrichtung nach Anspruch 1 oder 2, wobei der erste und der zweite geschlossene Tank (2, 3) mit trockener Luft gefüllt sind.

5. Gas-gefüllte Schalteinrichtung nach einem der vorhergehenden Ansprüche, **dadurch gekennzeichnet, dass** der Umschaltleiter (4d) in einem Basisabschnitt durch den ersten Leiter (4a) schwenkbar gestützt ist.

6. Gas-gefüllte Schalteinrichtung nach einem der vorhergehenden Ansprüche, **dadurch gekennzeichnet, dass** der erste Leiter (4a) ein Verbindungsanschluss ist, der zwischen dem ersten Ende des Umschaltleiters (4d) und dem Zuführungskabel (12) verbunden ist.

## Revendications

1. Appareil de commutation à gaz, comprenant :
un premier sectionneur (4) et un rupteur (5), qui sont disposés dans une première cuve fermée (2) qui est remplie d'un gaz isolant, et dont les bornes de connexion sont mutuellement reliées ou déconnectées par un conducteur inverseur (4d) ;
un premier conducteur de connexion (4a), dans lequel une extrémité est reliée audit premier sectionneur (4), et une autre extrémité est reliée à un câble d'alimentation (12) disposé dans ladite première cuve fermée (2) ; et
un deuxième conducteur de connexion (13, 15), dans lequel une extrémité est reliée à un bus (16) disposé à l'extérieur de ladite première cuve fermée (2), et une autre extrémité pénètre dans ladite première cuve fermée (2) au moyen d'un manchon isolant (14) et est ensuite reliée à une borne dudit rupteur (5) ;
**caractérisé en ce que**
ledit conducteur inverseur (4d) inclut une première extrémité, reliée au premier conducteur (4a), et une seconde extrémité sélectivement reliée audit (5) ou déconnectée dudit rupteur.

2. Appareil de commutation à gaz selon la revendication 1, comprenant :
une seconde cuve fermée (3), qui est remplie d'un gaz isolant ;
un second sectionneur (20) disposé dans ladite seconde cuve fermée (3) et relié audit rupteur (5) ;
le premier conducteur de connexion (4a) relié au moyen d'un manchon isolant (6) au câble d'alimentation externe (12) ;
le deuxième conducteur de connexion (13, 15) disposé dans ladite seconde cuve fermée (3) en plus de ladite première cuve fermée (2), dans lequel, lorsque le deuxième conducteur de connexion (13, 15) est disposé dans ladite seconde cuve fermée (3), une partie d'extrémité est reliée audit rupteur (5), et l'autre partie d'extrémité est reliée audit second sectionneur (20) ; et
un troisième conducteur de connexion (20a), qui est disposé dans ladite seconde cuve fermée (3), dans lequel une partie d'extrémité est reliée audit second sectionneur (20) et une autre partie d'extrémité est reliée à un bus (16) disposé à l'extérieur de ladite seconde cuve fermée (3) au moyen d'un manchon isolant (14).

3. Appareil de commutation à gaz selon la revendication 1 ou 2, dans lequel il est prévu des ensembles, incluant chacun ledit rupteur (5), ledit premier sectionneur (4), ledit câble d'alimentation (12) et ledit bus (16), le nombre desdits ensembles étant égal à un nombre d'ensembles de phases de circuits à courant alternatif polyphasé.

4. Appareil de commutation à gaz selon la revendication 1 ou 2, dans lequel lesdites première et seconde cuves fermées (2, 3) sont remplies d'air sec.

5. Appareil de commutation à gaz selon l'une quelconque des revendications précédentes, **caractérisé en ce que** ledit conducteur inverseur (4d) est soutenu, de façon pivotable, dans une partie de base par ledit premier conducteur (4a).

6. Appareil de commutation à gaz selon l'une quelconque des revendications précédentes, **caractérisé en ce que** ledit premier conducteur (4a) est une borne de connexion, montée entre ladite première extrémité dudit conducteur inverseur (4d) et ledit câble d'alimentation (12).
